(19) Europäisches Patentamt
European Patent Office
Office européen des brevets

(11) **EP 4 734 358 A1**

(12) **EUROPEAN PATENT APPLICATION**
published in accordance with Art. 153(4) EPC

(43) Date of publication:
**29.04.2026 Bulletin 2026/18**

(21) Application number: **24825670.3**

(22) Date of filing: **29.05.2024**

(51) International Patent Classification (IPC):
**H02P 29/00** (2016.01)    **G06F 30/20** (2020.01)

(52) Cooperative Patent Classification (CPC):
**G06F 30/20; H02P 29/00**

(86) International application number:
**PCT/JP2024/019613**

(87) International publication number:
**WO 2024/262263 (26.12.2024 Gazette 2024/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.06.2023 JP 2023101723**

(71) Applicant: **Hitachi, Ltd.**
**Tokyo 100-8280 (JP)**

(72) Inventor: **MAKI, Kohji**
**Tokyo 100-8280 (JP)**

(74) Representative: **Mewburn Ellis LLP**
**Aurora Building**
**Counterslip**
**Bristol BS1 6BX (GB)**

(54) **SIMULATION PROGRAM USING BEHAVIOR MODEL OF ELECTRIC MACHINE, RECORDING MEDIUM, CONTROL SYSTEM, AND METHOD FOR CREATING BEHAVIOR MODEL**

(57)    An object is to enable accurate representation of low- to high-frequency phenomena of an operating electric machine in which magnetic saturation has occurred. A simulation program 80 for an electric machine includes: a low-frequency characteristic calculation unit 1 that calculates a current vector of the electric machine and a counter electromotive force of each phase based on a rotor position 6 of the electric machine and phase voltages 5a to 5c of the respective phases; a low-to-high-frequency characteristic calculation model creation unit 3 that creates a low-to-high-frequency characteristic calculation model 10 by selecting a high-frequency equivalent circuit 8 associated with the calculated current vector from among a plurality of high-frequency equivalent circuits, and incorporating the calculated counter electromotive force of each phase into the selected high-frequency equivalent circuit 8 as each of voltage sources 9a to 9c; and a low-to-high-frequency characteristic calculation unit 4 that calculates a high frequency leakage current 12 of the electric machine and phase currents 11a to 11c of the respective phases by inputting the phase voltages 5a to 5c of the respective phases to the low-to-high-frequency characteristic calculation model 10.

Fig. 1

## Description

Technical Field

The present invention relates to a simulation program using a behavior model of an electric machine such as a motor or a generator, a recording medium in which the simulation program is recorded, a control system that controls driving of the electric machine based on a simulation result of the simulation program, and a method for creating the behavior model of the electric machine.

Background Art

In recent years, high-efficiency inverter-driven motors have been widely used, and high-frequency phenomena accompanying an inverter switching operation, such as electromagnetic noise, inverter surge, and bearing electric corrosion, have increasingly become problematic. A wind power generator connected to a power converter may also have a similar problem. On the other hand, in order to achieve miniaturization and higher output of the electric machine such as a motor or a generator, the electric machine is increasingly operated in a state in which an internal iron core is strongly magnetically saturated, whereby distortion of a current waveform from a sine wave has become more significant. Under such a background, a behavior model capable of considering magnetic saturation of the iron core and representing the high-frequency phenomenon has been required to evaluate the high-frequency phenomenon of the operating electric machine.

In response to such needs, for example, Non Patent Literature 1 discloses a technology of creating a high-frequency equivalent circuit by first obtaining a magnetic field distribution in an iron core by nonlinear magnetic field analysis, and then obtaining a resistance and an inductance of each coil conductor by analyzing a magnetic field that fluctuates so as to be superimposed on the magnetic field distribution.

Citation List

Non Patent Literature

Non Patent Literature 1: J. Zhang et al., "Finite Element Analysis and Evaluation of Stator Insulation in High Voltage Synchronous Motor", IEEE Trans. Magn., Vol. 48, No. 2 (2012) pp. 955-958

Summary of Invention

Technical Problem

However, in the technology disclosed in Non Patent Literature 1, only one condition is calculated for the magnetic field distribution in the iron core, and only one condition is calculated for a frequency of the fluctuating magnetic field. Therefore, in the technology disclosed in Non Patent Literature 1, it is not possible to represent a situation in which the magnetic saturation of the iron core changes from moment to moment due to acceleration/deceleration of the electric machine, load fluctuation, or the like. Furthermore, in the technology disclosed in Non Patent Literature 1, a counter electromotive force is not considered, and thus, a low-frequency phenomenon cannot be accurately represented.

The present invention has been made in view of the above, and an object of the present invention is to enable accurate representation of low- to high-frequency phenomena of an operating electric machine in which magnetic saturation has occurred.

Solution to Problem

In order to solve the above problems, a simulation program of an electric machine according to the present invention is a simulation program for an electric machine that causes a computer to function as a device that simulates a behavior of the electric machine including a rotor by using a behavior model of the electric machine, the simulation program including: a low-frequency characteristic calculation unit that calculates a current vector of the electric machine and a counter electromotive force of each phase based on a rotor position of the electric machine and phase voltages of the respective phases; a low-to-high-frequency characteristic calculation model creation unit that creates a low-to-high-frequency characteristic calculation model by selecting a high-frequency equivalent circuit associated with the current vector calculated by the low-frequency characteristic calculation unit from among a plurality of high-frequency equivalent circuits of the electric machine each associated with the current vector, and incorporating the counter electromotive force of each phase calculated by the low-frequency characteristic calculation unit into the selected high-frequency equivalent circuit as each of voltage sources of the respective phases; and a low-to-high-frequency characteristic calculation unit that calculates a high frequency leakage current of the electric machine and phase currents of the respective phases by inputting the phase voltages of the respective phases to the low-to-high-frequency characteristic calculation model.

In the present invention, "low-to-high-frequency" indicates a series of frequency bands from low to high frequencies, and includes not only low and high frequencies but also a frequency band between low and high frequencies.

Advantageous Effects of Invention

According to the present invention, it is possible to accurately represent low- to high-frequency phenomena of an operating electric machine in which magnetic saturation has occurred.

Problems, configurations, and effects other than those described above will become apparent from the following description of embodiments.

Brief Description of Drawings

Fig. 1 is a diagram illustrating a configuration of a computer including a simulation program for an electric machine according to a first embodiment.

Fig. 2 is a diagram for describing a current vector.

Fig. 3 is a diagram illustrating a typical waveform of a counter electromotive force.

Fig. 4 is a diagram for describing a high-frequency equivalent circuit database according to the first embodiment.

Fig. 5 is a diagram illustrating a behavior model according to the first embodiment.

Fig. 6 is a flowchart illustrating creation processing for the behavior model and frequency characteristic calculation processing according to the first embodiment.

Fig. 7 is a flowchart illustrating detailed processing of step S100 illustrated in Fig. 6.

Fig. 8 is a flowchart illustrating detailed processing of step S101 illustrated in Fig. 6.

Fig. 9 is a flowchart illustrating detailed processing of step S104 illustrated in Fig. 6.

Fig. 10 is a flowchart illustrating detailed processing of step S105 illustrated in Fig. 6.

Fig. 11 is a diagram illustrating a behavior model according to a second embodiment.

Fig. 12 is a diagram for describing a high-frequency equivalent circuit database according to the second embodiment.

Fig. 13 is a flowchart illustrating creation processing for the behavior model and frequency characteristic calculation processing according to the second embodiment.

Fig. 14 is a flowchart illustrating detailed processing of step S601 illustrated in Fig. 13.

Fig. 15 is a flowchart illustrating detailed processing of step S604 illustrated in Fig. 13.

Fig. 16 is a diagram illustrating a drive model of an electric machine, in which a behavior model according to a third embodiment is incorporated.

Fig. 17 is a diagram illustrating a drive model of an electric machine, in which a behavior model according to a fourth embodiment is incorporated.

Fig. 18 is a diagram for describing a control system for an electric machine, in which a behavior model according to a fifth embodiment is incorporated.

Description of Embodiments

Hereinafter, embodiments of the present invention will be described with reference to the drawings. Note that configurations or functions denoted by the same reference numerals in the respective embodiments have similar configurations or functions in the respective embodiments, and description thereof will be omitted unless otherwise specified.

[First Embodiment]

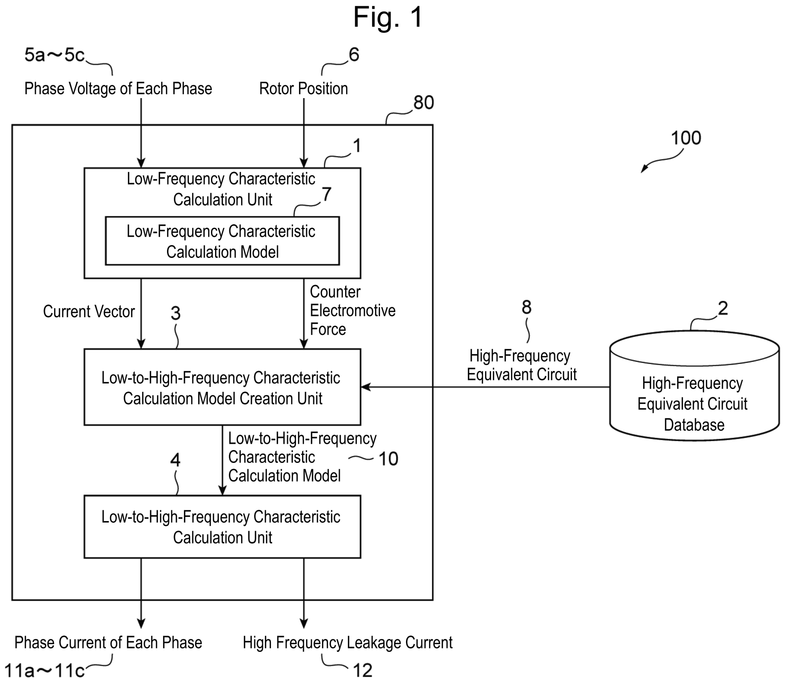

A first embodiment of the present invention will be described with reference to Figs. 1 to 10.

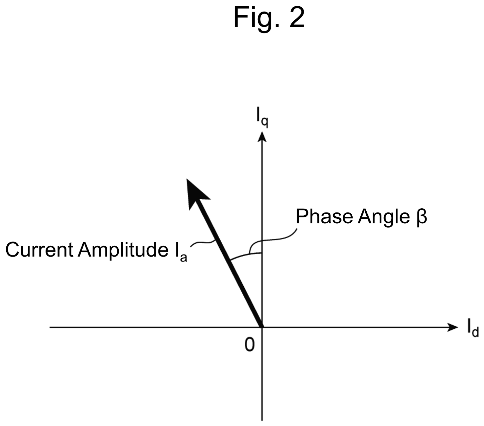

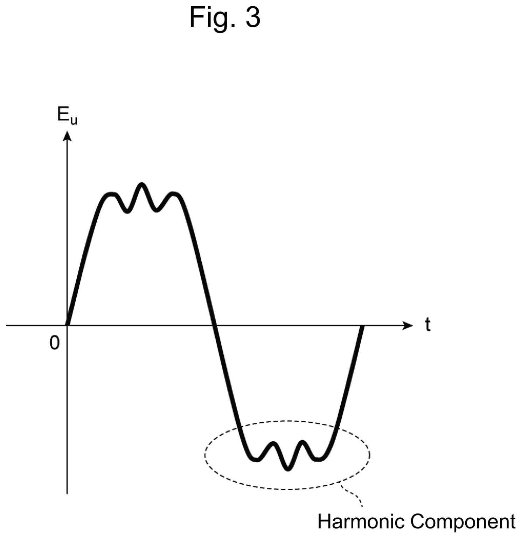

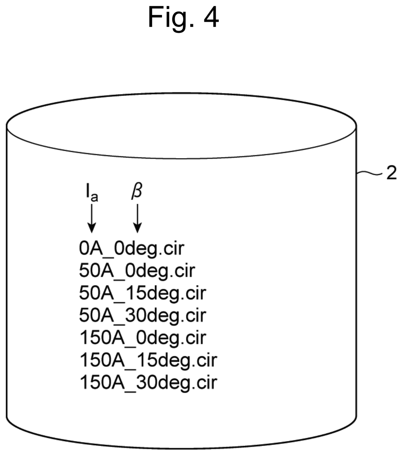

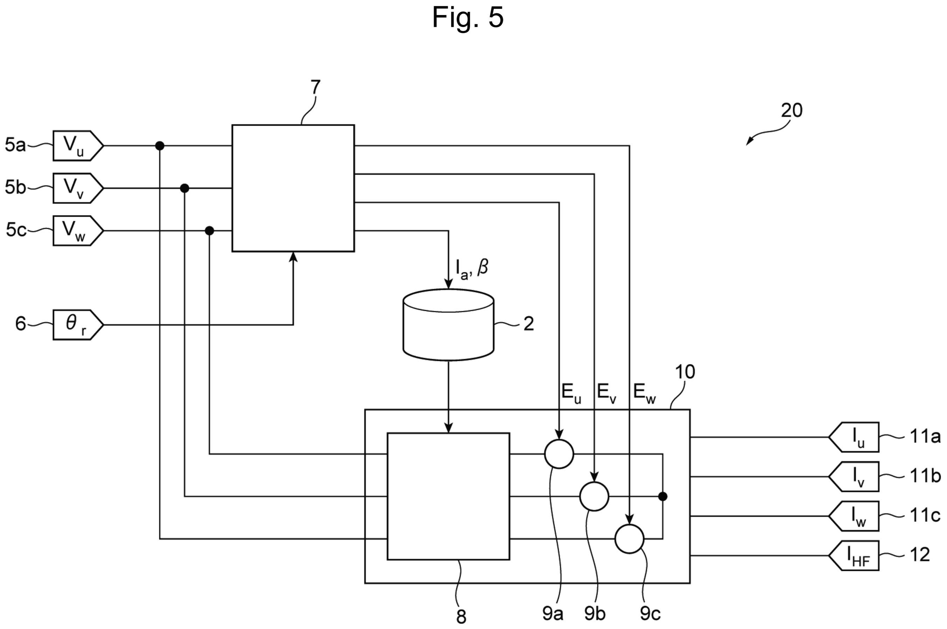

Fig. 1 is a diagram illustrating a configuration of a computer 100 including a simulation program 80 for an electric machine according to a first embodiment. Fig. 2 is a diagram for describing a current vector. Fig. 3 is a diagram illustrating a typical waveform of a counter electromotive force. Fig. 4 is a diagram for describing a high-frequency equivalent circuit database 2 according to the first embodiment. Fig. 5 is a diagram illustrating a behavior model 20 according to the first embodiment.

The electric machine is a machine including a rotor, such as a motor or a generator, and is also referred to as a rotating electric machine. In the present embodiment, a three-phase alternating current (AC) motor will be described as an example of the electric machine. The computer 100 illustrated in Fig. 1 is a computer in which a function of simulating a behavior of the electric machine is implemented by the simulation program 80 for the electric machine. The computer 100 includes a processor such as a central processing unit (CPU), storage devices such as a read only memory (ROM) and a random access memory (RAM), a communication device, an input/output device, and the like. The computer 100 can implement the simulation function by causing the processor to load the simulation program 80 stored in the ROM into the RAM and execute the simulation program 80. The simulation program 80 may be recorded in an external recording medium readable by the computer 100. The simulation program 80 may be transmitted from the outside to the computer 100 via a communication network and installed in the computer 100.

The simulation program 80 is a program that creates the behavior model 20 of the electric machine and simulates the behavior (a phenomenon occurring in the electric machine) of the electric machine by using the created behavior model 20. That is, the simulation program 80 is a program that causes the computer 100 to function as a device that simulates the behavior of the electric machine by using the behavior model 20 of the electric machine. The behavior model 20 is an equivalent circuit model that represents the behavior of the electric machine.

As illustrated in Fig. 1, the simulation program 80 includes a low-frequency characteristic calculation unit 1, a low-to-high-frequency characteristic calculation model creation unit 3, and a low-to-high-frequency characteristic calculation unit 4.

The low-frequency characteristic calculation unit 1 calculates the current vector of the electric machine and the counter electromotive force of each phase based on phase voltages 5a to 5c of the respective phases of the electric machine and a rotor position 6. The low-frequency characteristic calculation unit 1 calculates the current vector of the electric machine and the counter electromotive force of each phase by using a low-frequency characteristic calculation model 7 created in advance. The current vector is calculated based on phase currents Iu, Iv, and Iw of the respective phases using Formula 1. Here, $\theta$ is obtained by converting the rotor position into an electrical angle. The current vector has a d-axis current Id and a q-axis current Iq as components. The current vector can also be represented using a current amplitude Ia and a phase angle $\beta$ as shown in Formula 2 and illustrated in Fig. 2. The current vector calculated here is calculated using the low-frequency characteristic calculation model 7 that does not accurately represent a high-frequency characteristic.

[Mathematical Formula 1]

$$\begin{bmatrix} I_d \\ I_q \end{bmatrix} = \sqrt{\frac{2}{3}} \begin{bmatrix} \cos\theta & \cos\left(\theta - \frac{2}{3}\pi\right) & \cos\left(\theta + \frac{2}{3}\pi\right) \\ -\sin\theta & -\sin\left(\theta - \frac{2}{3}\pi\right) & -\sin\left(\theta + \frac{2}{3}\pi\right) \end{bmatrix} \begin{bmatrix} I_u \\ I_v \\ I_w \end{bmatrix}$$

[Mathematical Formula 2]

$$I_d = -I_a \cdot \sin\beta$$

$$I_q = I_a \cdot \cos\beta$$

The counter electromotive force of each phase includes a harmonic component as illustrated in Fig. 3. The harmonic component is caused by magnetic saturation of an iron core present inside the electric machine and a slot structure of the iron core. The low-frequency characteristic calculation unit 1 calculates the counter electromotive force including the harmonic component.

The low-frequency characteristic calculation model 7 calculates a low-frequency characteristic of the electric machine. Specifically, the low-frequency characteristic calculation model 7 calculates the current vector and the counter electromotive force of each phase by using the phase voltages 5a to 5c of the respective phases and the rotor position 6 as inputs. The low-frequency characteristic calculation model 7 calculates the current vector and the counter electromotive force of each phase based on a magnetic flux linkage of the electric machine that varies depending on the rotor position. The low-frequency characteristic calculation model 7 can represent that the magnetic flux linkage and an inductance change depending on the current amplitude, the phase angle, and the rotor position. Therefore, the low-frequency characteristic calculation model 7 may include a lookup table of the magnetic flux linkage and the inductance for the current amplitude, the phase angle, and the rotor position.

The low-to-high-frequency characteristic calculation model creation unit 3 selects a high-frequency equivalent circuit 8 associated with the current vector calculated by the low-frequency characteristic calculation unit 1 from among a plurality of high-frequency equivalent circuits each associated with the current vector. Then, the low-to-high-frequency characteristic calculation model creation unit 3 incorporates the counter electromotive force of each phase calculated by the low-frequency characteristic calculation unit 1 into the selected high-frequency equivalent circuit 8 as each of voltage sources 9a to 9c of the respective phases. In this way, the low-to-high-frequency characteristic calculation model creation unit 3 can create a low-to-high-frequency characteristic calculation model 10.

In addition, in a case where the current amplitude and the phase angle of the current vector have changed by a predetermined ratio or more, the low-to-high-frequency characteristic calculation model creation unit 3 selects the high-frequency equivalent circuit 8 corresponding to the current vector at a time point at which the change has occurred from among the plurality of high-frequency equivalent circuits, performs replacement with the selected high-frequency equivalent circuit 8, and recreates the low-to-high-frequency characteristic calculation model 10. As a result, the low-to-high-frequency characteristic calculation model 10 can be created using an appropriate high-frequency equivalent circuit 8 according to the degree of magnetic saturation of the iron core, and thus, it is possible to accurately represent frequency characteristics from low to high frequencies by appropriately representing a situation in which the magnetic saturation changes from moment to moment due to acceleration/deceleration of the electric machine, load fluctuation, or the like.

The above-described predetermined ratio serving as a reference for replacement of the high-frequency equivalent circuit 8 is not limited to be constant, and may be set to increase as the degree of magnetic saturation becomes stronger, for example. As a result, a frequency of the replacement can be optimized, so that a creation time of the behavior model 20 and a simulation time can be shortened.

The low-to-high-frequency characteristic calculation unit 4 calculates phase currents 11a to 11c of the respective phases of the electric machine and a high frequency leakage current 12 by inputting the phase voltages 5a to 5c of the respective phases to the low-to-high-frequency characteristic calculation model 10 created by the low-to-high-frequency characteristic calculation model creation unit 3.

The low-to-high-frequency characteristic calculation model 10 calculates frequency characteristics of a wide range of low to high frequencies as the frequency characteristics of the behavior of the electric machine. Specifically, the low-to-high-frequency characteristic calculation model 10 calculates the phase currents 11a to 11c of the respective phases of the electric machine and the high frequency leakage current 12 by using the phase voltages 5a to 5c of the respective phases as inputs. The low-to-high-frequency characteristic calculation model 10 includes the high-frequency equivalent circuit 8 that is associated with the current vector calculated by the low-frequency characteristic calculation unit 1 and is selected by the low-to-high-frequency characteristic calculation model creation unit 3, and the voltage sources 9a to 9c each indicating the counter electromotive force of each phase calculated by the low-frequency characteristic calculation unit 1.

The high-frequency equivalent circuit 8 included in the low-to-high-frequency characteristic calculation model 10 is one of the plurality of high-frequency equivalent circuits stored in advance in the high-frequency equivalent circuit database 2. The high-frequency equivalent circuit database 2 may be a database device provided in the computer 100 or a database device provided outside the computer 100.

As illustrated in Fig. 4, each of the plurality of high-frequency equivalent circuits is stored in the high-frequency equivalent circuit database 2 in association with the current vector. In the example of Fig. 4, each of the plurality of high-frequency equivalent circuits is stored in the high-frequency equivalent circuit database 2 in association with the current vector represented using the current amplitude Ia and the phase angle $\beta$. Each of the plurality of high-frequency equivalent circuits is stored in the high-frequency equivalent circuit database 2 in the form of a net list including connection information. ".cir" illustrated in Fig. 4 is an extension of data indicating a form of the net list including the connection information. By storing each high-frequency equivalent circuit in the form of the net list including the connection information, replacement of the high-frequency equivalent circuit 8 included in the low-to-high-frequency characteristic calculation model 10 can be performed at a higher speed than in the case of storing each high-frequency equivalent circuit in the form of an equivalent circuit constant.

A circuit constant of each of the plurality of high-frequency equivalent circuits is calculated by numerically analyzing an electromagnetic field inside the electric machine. As a result, the circuit constant of the high-frequency equivalent circuit can be calculated even in a design stage in which an actual machine does not yet exist or under a condition in which actual measurement is difficult. Each of the plurality of high-frequency equivalent circuits includes a network circuit of a resistance and an inductance in order to represent frequency dependency of the resistance and the inductance as the circuit constants. In addition, each of the plurality of high-frequency equivalent circuits includes a capacitance in order to represent an influence of a stray capacitance of each portion of the electric machine.

Specifically, each of the plurality of high-frequency equivalent circuits is created by calculating a magnetic field distribution in the iron core of the electric machine by nonlinear magnetic field analysis in consideration of the magnetic saturation of the electric machine for a plurality of current vectors, calculating a resistance and an inductance of each coil conductor of the electric machine for each frequency by analysis of a magnetic field that fluctuates so as to be superimposed on the magnetic field distribution in the iron core for the plurality of current vectors by frequency response magnetic field analysis, and using the resistance and the inductance for each frequency as the circuit constants of each of the plurality of high-frequency equivalent circuits. As a result, it is possible to create the high-frequency equivalent circuit with high accuracy according to the degree of magnetic saturation, and thus, it is possible to create the low-to-high-frequency characteristic calculation model 10 capable of more accurately representing a situation in which the magnetic saturation changes from moment to moment.

As illustrated in Fig. 5, the behavior model 20 of the electric machine calculates the phase currents 11a to 11c of the respective phases and the high frequency leakage current 12 by using the phase voltages 5a to 5c of the respective phases and the rotor position 6 as inputs. The behavior model 20 includes the low-frequency characteristic calculation model 7 and the low-to-high-frequency characteristic calculation model 10. As described above, the low-to-high-frequency characteristic calculation model 10 includes the high-frequency equivalent circuit 8 selected from among the plurality of high-frequency equivalent circuits stored in the high-frequency equivalent circuit database 2 and the voltage sources 9a to 9c each indicating the counter electromotive force of each phase calculated by the low-frequency characteristic calculation model 7. In the simulation program 80, the low-frequency characteristic calculation unit 1 and the low-to-high-frequency characteristic calculation model creation unit 3 create the behavior model 20, and the low-to-high-frequency characteristic calculation unit 4 performs circuit analysis using the behavior model 20 to calculate the phase currents 11a to 11c of the respective phases and the high frequency leakage current 12.

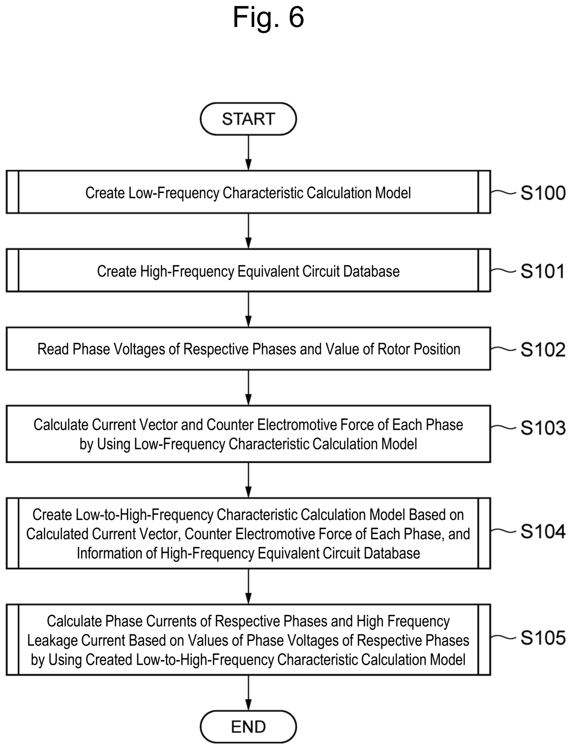

Fig. 6 is a flowchart illustrating creation processing for the behavior model 20 and frequency characteristic calculation processing according to the first embodiment. The processing illustrated in Fig. 6 is executed by the processor of the computer 100 based on the simulation program 80.

First, as the creation processing for the behavior model 20, the low-frequency characteristic calculation model 7 is created in step S100. Then, in step S101, the high-frequency equivalent circuit database 2 is created. Then, in step S102, values of the phase voltages 5a to 5c of the respective phases and the rotor position 6 are read. Then, in step S103, the current vector and the counter electromotive force of each phase are calculated using the low-frequency characteristic calculation model 7. Then, in step S104, the low-to-high-frequency characteristic calculation model 10 is created based on the current vector, the counter electromotive force of each phase, and information regarding the plurality of high-frequency equivalent circuits stored in the high-frequency equivalent circuit database 2. As a result, the behavior model 20 is created.

Next, as the frequency characteristic calculation processing, in step S105, the phase currents 11a to 11c of the respective phases and the high frequency leakage current 12 are calculated from the values of the phase voltages 5a to 5c of the respective phases by using the low-to-high-frequency characteristic calculation model 10.

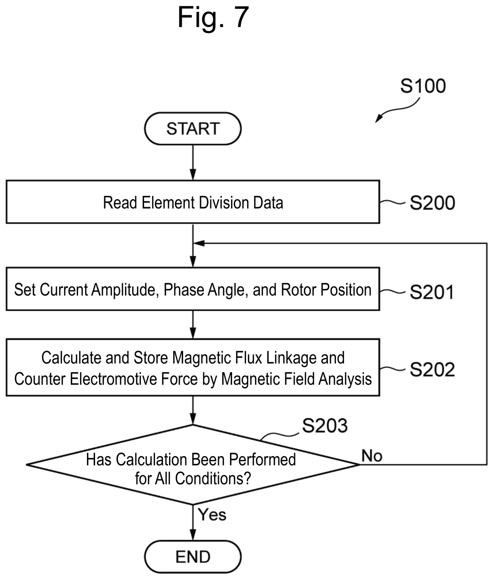

Fig. 7 is a flowchart illustrating detailed processing of step S100 illustrated in Fig. 6.

First, in step S200, element division data of the electric machine used for the magnetic field analysis is read. The element division data is usually a partial model cut out in consideration of periodic symmetry in order to shorten an analysis time, but may be an entire model. Then, in step S201, the current amplitude, the phase angle, and the rotor position are set as analysis conditions. Then, in step S202, the magnetic field analysis is performed for the set analysis conditions, and the magnetic flux linkage and the counter electromotive force are calculated and stored. The inductance and a torque may be calculated and stored accordingly. In addition, the magnetic field distribution in the iron core may be stored and used when creating the high-frequency equivalent circuit database 2 described below. Then, in step S203, it is determined whether or not the calculation has been performed for all the analysis conditions. In a case where the calculation has not been performed for all the analysis conditions, step S201 and the subsequent steps are repeated while changing the analysis conditions. In a case where the calculation has been performed for all the analysis conditions, the processing illustrated in Fig. 7 ends. In this way, a database of the magnetic flux linkage and the counter electromotive force for the current amplitude, the phase angle, and the rotor position is obtained. As a result, the low-frequency characteristic calculation model 7 that calculates the current vector and the counter electromotive force of each phase based on the magnetic flux linkage that varies depending on the rotor position can be created.

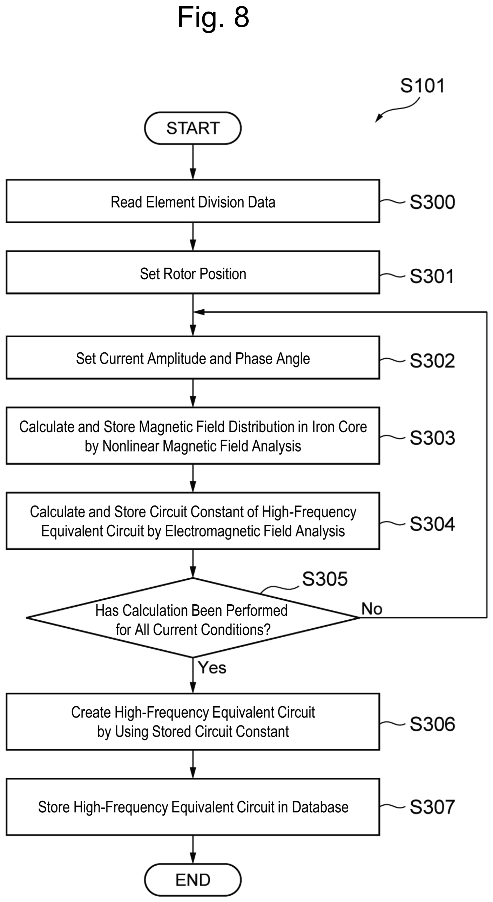

Fig. 8 is a flowchart illustrating detailed processing of step S101 illustrated in Fig. 6.

Here, it is assumed that the rotor position is fixed to a desired value. First, in step S300, element division data of the electric machine to be used for electromagnetic field analysis is read. The element division data is usually a partial model cut out in consideration of periodic symmetry in order to shorten an analysis time, but may be an entire model. After the rotor position is set to a desired value in step S301, the current amplitude and the phase angle are set as the analysis conditions in step S302. Then, in step S303, the nonlinear magnetic field analysis is performed for the set analysis conditions, and the magnetic field distribution in the iron core is calculated and stored. Alternatively, the magnetic field distribution in the iron core stored when creating the low-frequency characteristic calculation model 7 may be used. Then, in step S304, the circuit constant of the high-frequency equivalent circuit is calculated and stored by the electromagnetic field analysis. Specifically, the frequency response magnetic field analysis is performed so as to be superimposed on the magnetic field distribution in the iron core, and the resistance and inductance of each coil conductor of the electric machine are calculated and stored. In addition, electrostatic capacitances between the coil conductors, between each coil conductor and a stator core, between each coil conductor and a rotor core, between the stator core and the rotor core, and the like are calculated and stored by electric field analysis. Then, in step S305, it is determined whether or not the calculation has been performed for all the current conditions (analysis conditions). In a case where the calculation has not been performed for all the current conditions, step S302 and the subsequent steps are repeated while changing the current conditions. In a case where the calculation has been performed for all the analysis conditions, in step S306, the high-frequency equivalent circuit is created using the stored circuit constant. Then, in step S307, the generated high-frequency equivalent circuit is stored in the high-frequency equivalent circuit database 2 in association with the current amplitude and the phase angle (that is, the current vectors) as the conditions. Then, the processing illustrated in Fig. 8 ends. The high-frequency equivalent circuit is preferably stored in the form of the net list including the connection information in the database, but may also be stored in the form of the circuit constant.

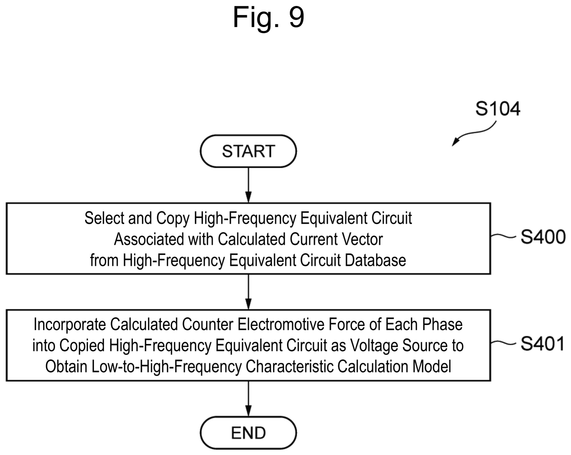

Fig. 9 is a flowchart illustrating detailed processing of step S104 illustrated in Fig. 6.

First, in step S400, the high-frequency equivalent circuit 8 associated with the current vector calculated in step S103 of Fig. 6 is selected and copied from the high-frequency equivalent circuit database 2. Then, in step S401, the counter electromotive force of each phase calculated in step S103 is incorporated into the copied high-frequency equivalent circuit 8 as each of the voltage sources 9a to 9c of the respective phases to obtain the low-to-high-frequency characteristic calculation model 10. Then, the processing illustrated in Fig. 9 ends.

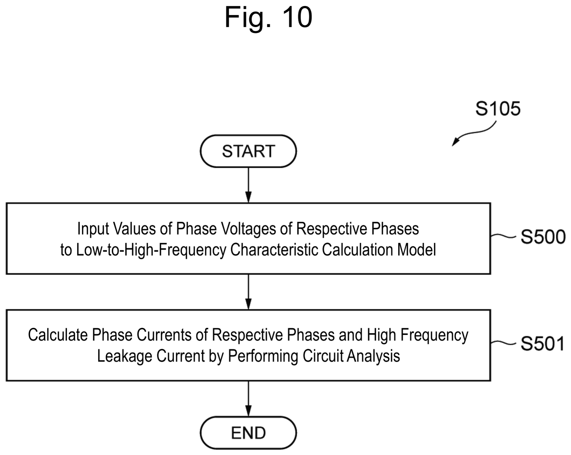

Fig. 10 is a flowchart illustrating detailed processing of step S105 illustrated in Fig. 6.

First, in step S500, the values of the phase voltages 5a to 5c of the respective phases are input to the low-to-high-frequency characteristic calculation model 10. Then, in step S501, the circuit analysis is performed to calculate the phase currents 11a to 11c of the respective phases and the high frequency leakage current 12. Then, the processing illustrated in Fig. 10 ends.

As described above, the simulation program 80 according to the present embodiment is a simulation program of the electric machine, which causes the computer 100 to function as a device that simulates the behavior of the electric machine by using the behavior model 20 of the electric machine including the rotor. The simulation program 80 includes: the low-frequency characteristic calculation unit 1 that calculates the current vector of the electric machine and the counter electromotive force of each phase based on the rotor position 6 of the electric machine and the phase voltages 5a to 5c of the respective phases; the low-to-high-frequency characteristic calculation model creation unit 3 that creates the low-to-high-frequency characteristic calculation model 10 by selecting the high-frequency equivalent circuit 8 associated with the current vector calculated by the low-frequency characteristic calculation unit 1 from among the plurality of high-frequency equivalent circuits of the electric machine each associated with the current vector, and incorporating the counter electromotive force of each phase calculated by the low-frequency characteristic calculation unit 1 into the selected high-frequency equivalent circuit 8 as each of the voltage sources 9a to 9c of the respective phases; and the low-to-high-frequency characteristic calculation unit 4 that calculates the high frequency leakage current 12 of the electric machine and the phase currents 11a to 11c of the respective phases by inputting the phase voltages 5a to 5c of the respective phases to the low-to-high-frequency characteristic calculation model 10.

As a result, the simulation program 80 according to the present embodiment can select the high-frequency equivalent circuit 8 included in the low-to-high-frequency characteristic calculation model 10 according to the degree of magnetic saturation of the iron core, and thus can represent a situation in which the magnetic saturation of the electric machine changes from moment to moment. Furthermore, in the simulation program 80, since the voltage sources 9a to 9c each indicating the counter electromotive force of each phase, which includes the harmonic component, are incorporated in the high-frequency equivalent circuit 8, it is possible to accurately represent the characteristics of a wide range of low to high frequencies. Therefore, the simulation program 80 can seamlessly and accurately represent the behavior of the operating electric machine in which the magnetic saturation has occurred from the low-frequency characteristics to the high-frequency characteristics. Therefore, the simulation program 80 can accurately represent low- to high-frequency phenomena inside the operating electric machine in which the magnetic saturation has occurred.

Furthermore, in the simulation program 80 according to the present embodiment, each of the plurality of high-frequency equivalent circuits is created by calculating the magnetic field distribution in the iron core of the electric machine by nonlinear magnetic field analysis in consideration of the magnetic saturation of the electric machine for the plurality of current vectors, calculating the resistance and the inductance of each coil conductor of the electric machine as the circuit constants of each of the plurality of high-frequency equivalent circuits for each frequency by analysis of the magnetic field that fluctuates so as to be superimposed on the magnetic field distribution in the iron core for the plurality of current vectors by the frequency response magnetic field analysis, and using the resistance and the inductance for each frequency as the circuit constants of each of the plurality of high-frequency equivalent circuits.

As a result, the simulation program 80 according to the present embodiment can create the high-frequency equivalent circuit with high accuracy according to the degree of magnetic saturation, and thus, it is possible to create the low-to-high-frequency characteristic calculation model 10 that can more accurately represent a situation in which the magnetic saturation changes from moment to moment. Therefore, the simulation program 80 can more accurately represent low- to high-frequency phenomena inside the operating electric machine in which the magnetic saturation has occurred.

A method for creating the behavior model 20 according to the present embodiment is a method for creating a behavior model of an electric machine used to simulate a behavior of the electric machine including a rotor. The method for creating the behavior model 20 includes: creating the low-frequency characteristic calculation model 7 that calculates the current vector of the electric machine and the counter electromotive force of each phase based on the rotor position 6 of the electric machine and the phase voltages 5a to 5c of the respective phases (step S100); creating the high-frequency equivalent circuit database 2 that stores the plurality of high-frequency equivalent circuits of the electric machine each associated with the current vector (step S101); and creating the low-to-high-frequency characteristic calculation model 10 that calculates the high frequency leakage current 12 of the electric machine and the phase currents 11a to 11c of the respective phases based on the phase voltages 5a to 5c of the respective phases, by selecting the high-frequency equivalent circuit 8 associated with the current vector calculated by the low-frequency characteristic calculation model 7 from among the plurality of high-frequency equivalent circuits stored in the high-frequency equivalent circuit database 2, and incorporating the counter electromotive force of each phase calculated by the low-frequency characteristic calculation model 7 into the selected high-frequency equivalent circuit 8 as each of the voltage sources 9a to 9c of the respective phases (step S104).

As a result, the method for creating the behavior model 20 according to the present embodiment can create the behavior model 20 capable of seamlessly and accurately representing the behavior of the operating electric machine in which the magnetic saturation has occurred from the low-frequency characteristics to the high-frequency characteristics. Therefore, the method for creating the behavior model 20 can accurately represent low- to high-frequency phenomena inside the operating electric machine in which the magnetic saturation has occurred.

Furthermore, in the method for creating the behavior model 20 according to the present embodiment, the creating of the high-frequency equivalent circuit database 2 includes: calculating the magnetic field distribution in the iron core of the electric machine by performing the nonlinear magnetic field analysis in consideration of the magnetic saturation of the electric machine for the plurality of current vectors (step S303); calculating the resistance and the inductance of each coil conductor of the electric machine for each frequency as the circuit constants of each of the plurality of high-frequency equivalent circuits by analyzing the magnetic field that fluctuates so as to be superimposed on the magnetic field distribution in the iron core for the plurality of current vectors by the frequency response magnetic field analysis (step S304); creating the plurality of high-frequency equivalent circuits using the resistance and the inductance for each frequency as the circuit constants of each of the plurality of high-frequency equivalent circuits (step S306); and storing each of the plurality of high-frequency equivalent circuits in the high-frequency equivalent circuit database 2 in association with the current vector (step S307).

As a result, in the method for creating the behavior model 20 according to the present embodiment, it is possible to create the high-frequency equivalent circuit with high accuracy according to the degree of magnetic saturation, and thus, it is possible to create the low-to-high-frequency characteristic calculation model 10 capable of more accurately representing a situation in which the magnetic saturation changes from moment to moment. Therefore, the method for creating the behavior model 20 can more accurately represent low- to high-frequency phenomena inside the operating electric machine in which the magnetic saturation has occurred.

[Second Embodiment]

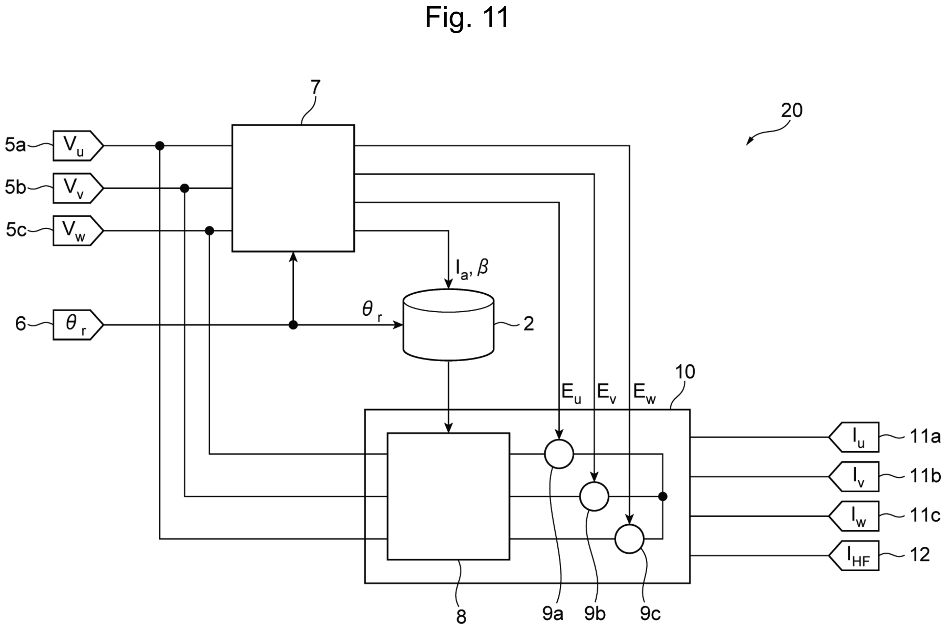

A second embodiment of the present invention will be described with reference to Figs. 11 to 15. In the second embodiment, description of the same configurations and operations as those of the first embodiment will be omitted.

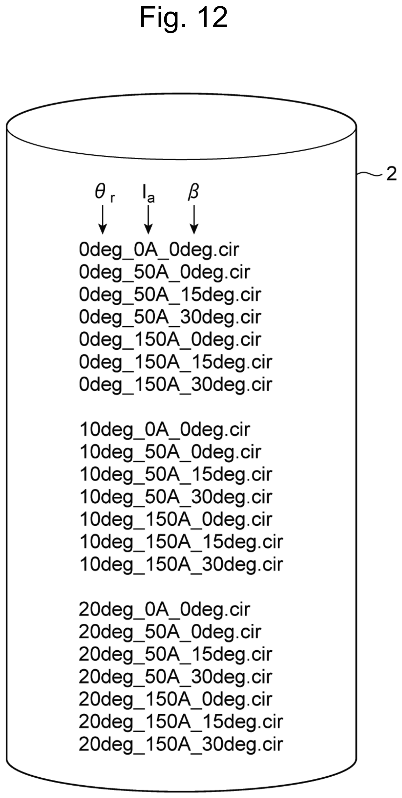

Fig. 11 is a diagram illustrating a behavior model 20 according to the second embodiment. Fig. 12 is a diagram for describing a high-frequency equivalent circuit database 2 according to the second embodiment.

Unlike the first embodiment, a simulation program 80 according to the second embodiment creates a low-to-high-frequency characteristic calculation model 10 by selecting a high-frequency equivalent circuit 8 associated with both a rotor position 6 and a calculated current vector from among a plurality of high-frequency equivalent circuits each associated with both the current vector and the rotor position and stored in the high-frequency equivalent circuit database 2. That is, each of the plurality of high-frequency equivalent circuits stored in the high-frequency equivalent circuit database 2 according to the second embodiment is associated with both the current vector and the rotor position as illustrated in Fig. 12.

As a result, the simulation program 80 according to the second embodiment can create the behavior model 20 of an electric machine in consideration of dependency on the rotor position 6. Therefore, the simulation program 80 according to Embodiment 2 can more accurately represent low- to high-frequency phenomena inside the operating electric machine in which magnetic saturation has occurred.

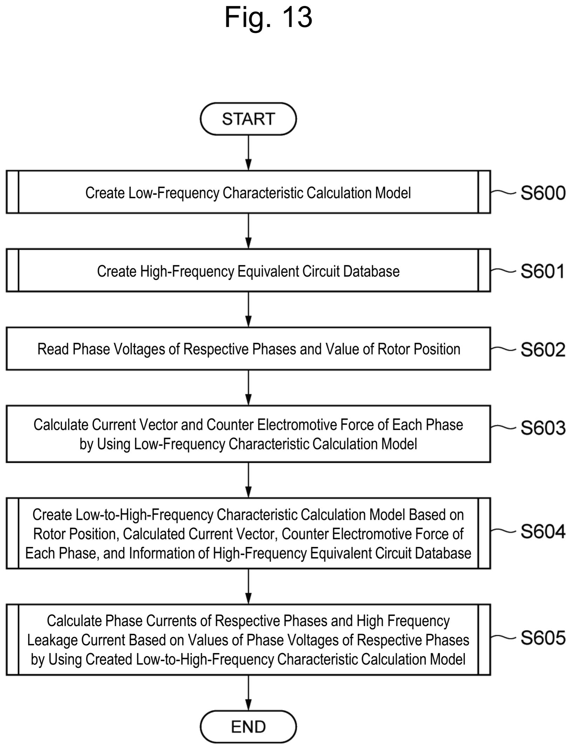

Fig. 13 is a flowchart illustrating creation processing for the behavior model 20 and frequency characteristic calculation processing according to the second embodiment.

In the creation processing for the behavior model 20 according to the second embodiment, steps S600, S602, and S603 are similar to steps S100, S102, and S103 according to the first embodiment, respectively. Step S605, which is the frequency characteristic calculation processing according to the second embodiment, is similar to step S105 according to the first embodiment. Hereinafter, in the creation processing for the behavior model 20 according to the second embodiment, steps S601 and S604 different from those of the first embodiment will be described.

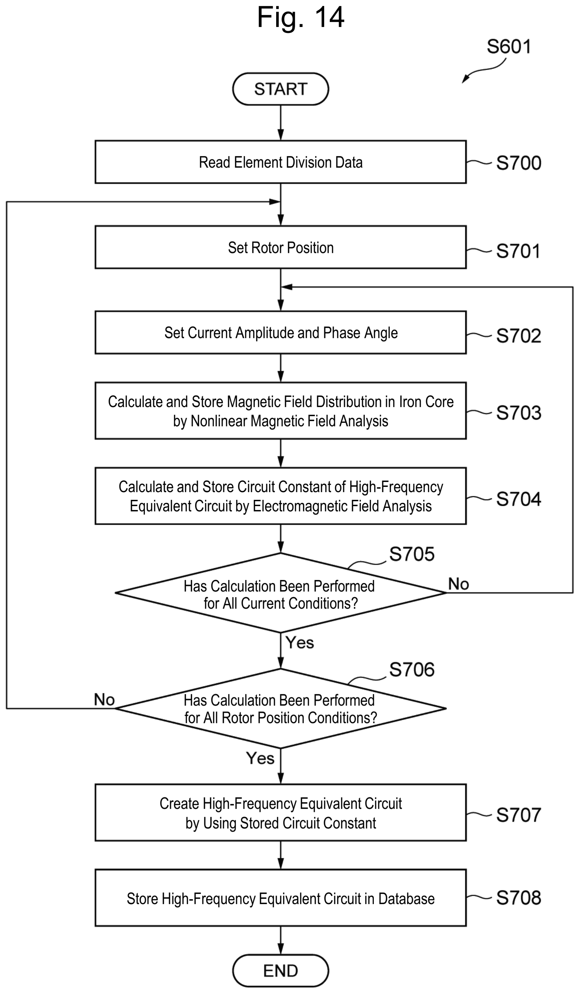

Fig. 14 is a flowchart illustrating detailed processing of step S601 illustrated in Fig. 13.

Steps S700 to S705 are similar to steps S300 to S305 according to the first embodiment. In step S706, it is determined whether or not the calculation has been performed for all rotor position conditions (analysis conditions). In a case where the calculation has not been performed for all the rotor position conditions, step S701 and subsequent steps are repeated while changing the rotor position conditions. In a case where the calculation has been performed for all the analysis conditions, in step S707, the high-frequency equivalent circuit is created using a stored circuit constant. Then, in step S708, the generated high-frequency equivalent circuit is stored in the high-frequency equivalent circuit database 2 in association with both a current amplitude and a phase angle (that is, the current vectors) of each condition and the rotor position. Then, the processing illustrated in Fig. 14 ends.

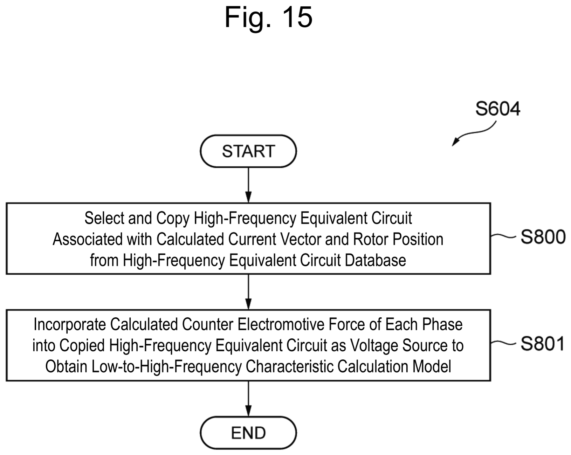

Fig. 15 is a flowchart illustrating detailed processing of step S604 illustrated in Fig. 13.

In step S800, the high-frequency equivalent circuit 8 associated with the calculated current vector and the rotor position 6 is selected and copied from the high-frequency equivalent circuit database 2. Then, in step S801, a counter electromotive force of each phase is incorporated into the copied high-frequency equivalent circuit 8 as each of voltage sources 9a to 9c of the respective phases to obtain a low-to-high-frequency characteristic calculation model 10. Then, the processing illustrated in Fig. 15 ends.

A method for creating the behavior model 20 according to the second embodiment includes storing each of the plurality of high-frequency equivalent circuits in the high-frequency equivalent circuit database 2 in association with both the current vector and the rotor position (step S708).

As a result, the method for creating the behavior model 20 according to the second embodiment can create the behavior model 20 of the electric machine in consideration of dependency on the rotor position 6. Therefore, the method for creating the behavior model 20 according to the second embodiment can more accurately represent low- to high-frequency phenomena in the operating electric machine in which the magnetic saturation has occurred.

[Third Embodiment]

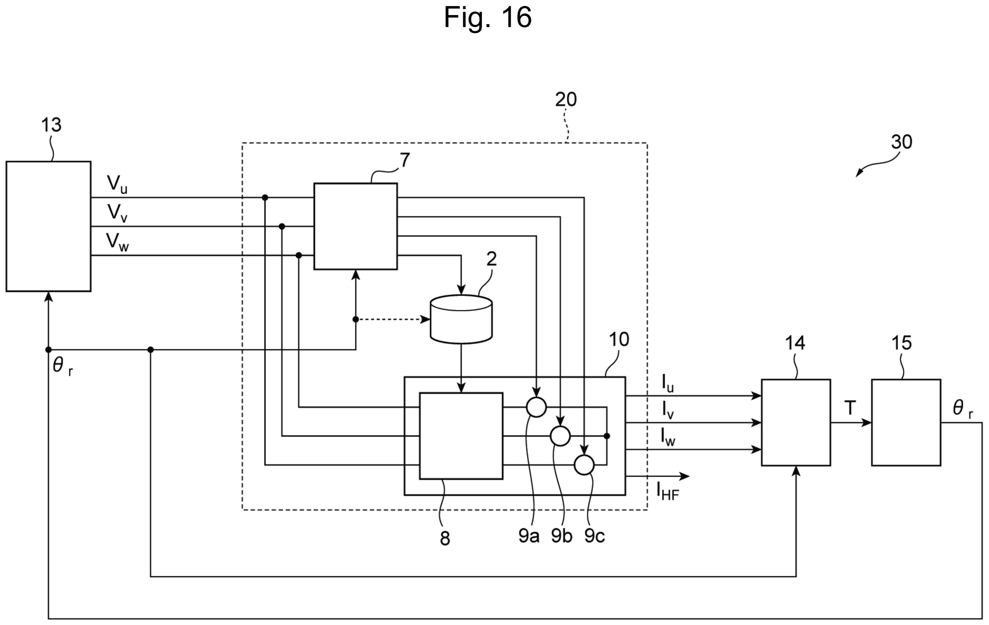

A third embodiment of the present invention will be described with reference to Fig. 16. In the third embodiment, description of the same configurations and operations as those of the first and second embodiments will be omitted.

Fig. 16 is a diagram illustrating a drive model 30 of an electric machine, in which a behavior model 20 according to the third embodiment is incorporated.

The behavior model 20 according to the third embodiment is incorporated in the drive model 30. The drive model 30 is an equivalent circuit model that represents a behavior of a control system that controls driving of the electric machine. The drive model 30 connects a power supply model 13 to the behavior model 20 and applies phase voltages 5a to 5c of respective phases. The drive model 30 also inputs a rotor position 6 to the behavior model 20. In the behavior model 20, information regarding the rotor position 6 may be used to select a high-frequency equivalent circuit 8. The drive model 30 inputs phase currents 11a to 11c of the respective phases output from the behavior model 20 and the rotor position 6 to a torque calculation model 14 to calculate a torque. The drive model 30 inputs the calculated torque to a rotor position calculation model 15 to calculate the rotor position 6 at the next time, and feeds back the rotor position 6 to the power supply model 13 to determine the phase voltages 5a to 5c of the respective phases at the next time.

A simulation program 80 according to the third embodiment can create not only the behavior model 20 but also the drive model 30 to simulate the behavior of the control system that controls the driving of the electric machine by using the drive model 30.

As a result, the simulation program 80 according to the third embodiment can accurately represent an influence of harmonic components of the phase currents 11a to 11c of the respective phases determined by high-frequency characteristics of the electric machine on the torque or efficiency, for example. Therefore, the simulation program 80 according to the third embodiment can implement design of a high-performance control system and control of the electric machine.

[Fourth Embodiment]

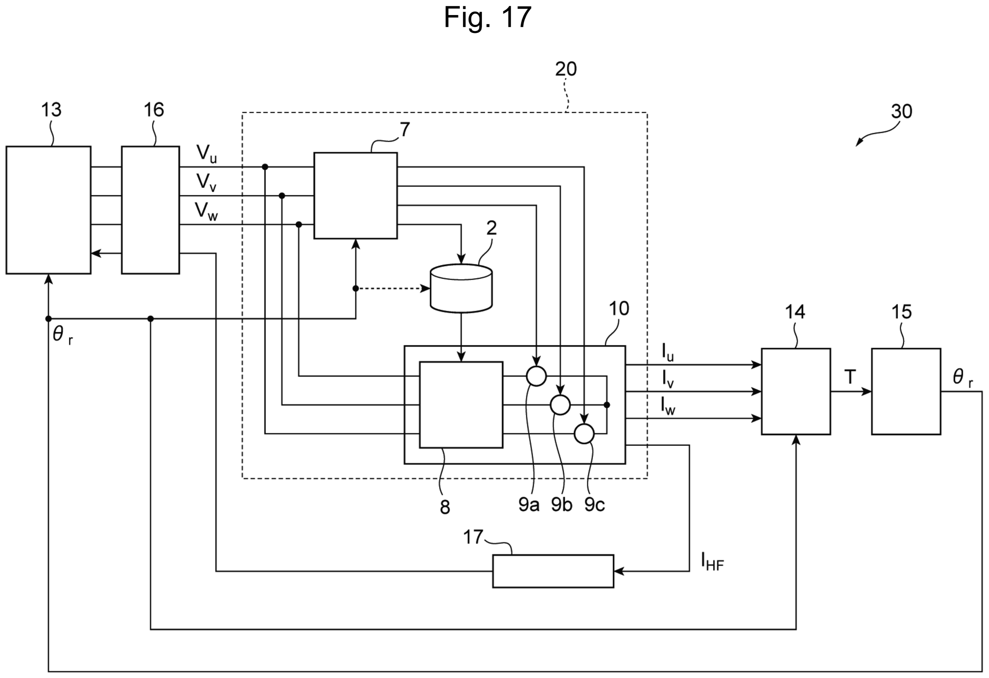

A fourth embodiment of the present invention will be described with reference to Fig. 17. In the fourth embodiment, description of the same configurations and operations as those of the first to third embodiments will be omitted.

Fig. 17 is a diagram illustrating a drive model 30 of an electric machine, in which a behavior model 20 according to the fourth embodiment is incorporated.

In the drive model 30 according to the fourth embodiment, a cable model 16 is additionally provided between a power supply model 13 and the behavior model 20, and a ground model 17 is additionally provided on a path through which a high frequency leakage current 12 flows, as compared with the third embodiment.

A simulation program 80 according to the fourth embodiment can create not only the behavior model 20 but also the drive model 30, in which the cable model 16 and the ground model 17 are additionally provided, to simulate a behavior of a control system by using the drive model 30.

As a result, the simulation program 80 according to the fourth embodiment can accurately calculate a spatial distribution of the high frequency leakage current 12, and can thus improve accuracy in estimating a voltage distribution of the electric machine and electromagnetic noise. Therefore, the simulation program 80 according to the fourth embodiment can implement design of a high-performance and highly-reliable control system and control of the electric machine as a digital twin capable of reproducing a high-frequency phenomenon of the operating electric machine with high accuracy. For example, the simulation program 80 according to the fourth embodiment can be used for designing and controlling a railway vehicle, an electric vehicle, an electric aircraft, or the like.

[Fifth Embodiment]

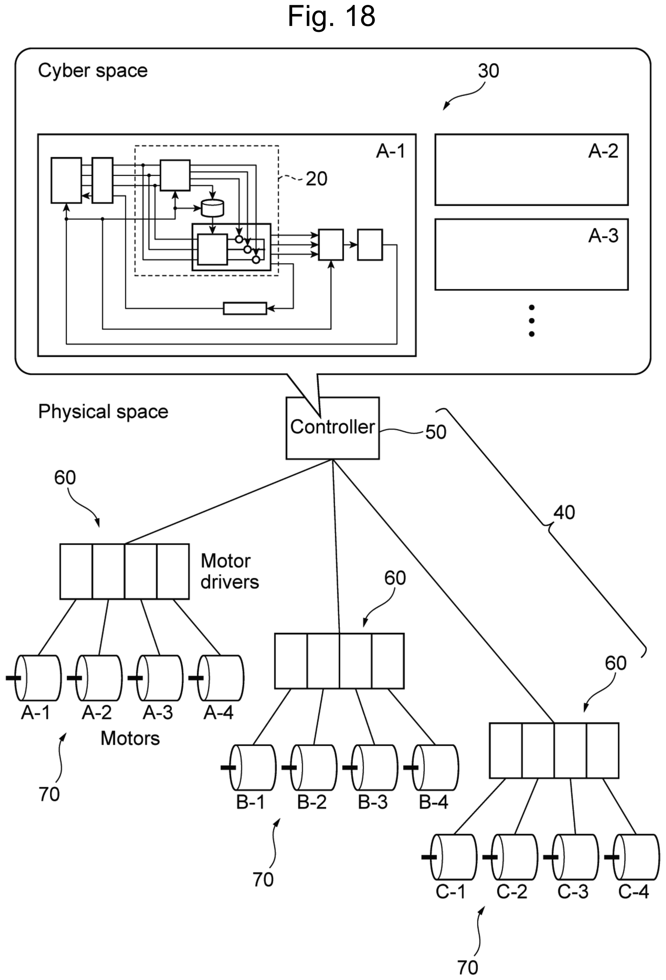

A fifth embodiment of the present invention will be described with reference to Fig. 18. In the fifth embodiment, description of the same configurations and operations as those of the first to fourth embodiments will be omitted.

Fig. 18 is a diagram for describing a control system 40 for an electric machine, in which a behavior model 20 according to the fifth embodiment is incorporated.

The behavior model 20 according to the fifth embodiment may be incorporated in not only a simulated control system but also an actual machine. For example, the behavior model 20 according to the fifth embodiment may be incorporated in a controller 50 of the control system 40 for the electric machine in a state of being incorporated in the drive model 30 illustrated in Fig. 17. The control system 40 is a system that controls driving of the electric machine. The control system 40 controls driving of the electric machine based on a simulation result of a simulation program 80 by using the behavior model 20 according to the fifth embodiment.

The control system 40 includes, for example, a driver 60 that drives a motor 70, which is one of the electric machines, and the controller 50 that controls the driver 60. In the example of Fig. 18, a plurality of drivers 60 and motors 70 are connected to one controller 50, but one driver 60 and one motor 70 may be connected to one controller 50.

The control system 40 is often not equipped with a sensor that actually measures a voltage distribution of the motor 70 or a spatial distribution of a high frequency leakage current 12. Therefore, the controller 50 in which the behavior model 20 according to the fifth embodiment is incorporated performs simulation in real time, and estimates and monitors the voltage distribution and the spatial distribution of the high frequency leakage current 12 that change depending on an output of the motor 70 or an environmental change from moment to moment. Then, the controller 50 outputs a control command to the driver 60 in a case where it is estimated that a voltage applied to a specific portion of a winding of the motor 70 or a bearing exceeds an allowable value or electromagnetic noise occurring due to the high frequency leakage current 12 exceeds an allowable value. In this case, for example, the controller 50 outputs, to the driver 60, a control command for suppressing the output of the motor 70, a control command for increasing a rise time of a driving voltage pulse generated by the driver 60, a control command for changing a carrier frequency, or the like. As a result, the controller 50 can reduce the voltage of the motor 70 or the high frequency leakage current 12.

If such a countermeasure of suppressing the output of the motor 70 or increasing the rise time of the driving voltage pulse is constantly taken, adverse effects such as a decrease in efficiency of the motor 70 occur. However, by incorporating the behavior model 20 according to the fifth embodiment into the controller 50 and controlling the driving of the motor 70 based on the simulation result of the simulation program 80 using the behavior model 20, the countermeasure can be taken only at a necessary timing.

Note that the present invention is not limited to the above embodiments, and includes various modified examples. For example, the above embodiments have been described in detail for easy understanding of the present invention, and the present invention is not necessarily limited to those having all the described configurations. Further, a part of a configuration of one embodiment can be replaced with a configuration of another embodiment, and a configuration of an embodiment can be added to a configuration of another embodiment. In addition, it is possible to perform addition, deletion, and replacement of other configurations for a part of a configuration of each embodiment.

In addition, some or all of the above configurations, functions, processing units, processing means, or the like may be implemented by hardware, for example, by being designed as an integrated circuit or the like. In addition, each of the above configurations, functions, and the like may be implemented by software by a processor interpreting and executing a program for implementing each function. Information such as a program, a table, or a file for implementing each function can be stored in a recording device such as a memory, a hard disk, or a solid state drive (SSD), or a recording medium such as an integrated circuit (IC) card, a secure digital (SD) card, or a digital versatile disc (DVD).

In addition, the control lines and the information lines indicate those considered necessary for the description, and do not necessarily indicate all the control lines and the information lines on the product. In practice, it may be considered that almost all the configurations are connected to each other.

Reference Signs List

| 1 | Low-frequency characteristic calculation unit |
|---|---|
| 2 | High-frequency equivalent circuit database (database) |
| 3 | Low-to-high-frequency characteristic calculation model creation unit |
| 4 | Low-to-high-frequency characteristic calculation unit |
| 5a to 5c | Phase voltage of each phase |
| 6 | Rotor position |
| 7 | Low-frequency characteristic calculation model |
| 8 | High-frequency equivalent circuit |
| 9a to 9c | Voltage source indicating counter electromotive force of each phase |
| 10 | Low-to-high-frequency characteristic calculation model |
| 11a to 11c | Phase current of each phase |
| 12 | High frequency leakage current |
| 20 | Behavior model |
| 40 | Control system |
| 70 | Motor (electric machine) |
| 80 | Simulation program |
| 100 | Computer |

**Claims**

1. A simulation program for an electric machine that causes a computer to function as a device that simulates a behavior of the electric machine including a rotor by using a behavior model of the electric machine, the simulation program comprising:

   a low-frequency characteristic calculation unit that calculates a current vector of the electric machine and a counter electromotive force of each phase based on a rotor position of the electric machine and phase voltages of the respective phases;
   a low-to-high-frequency characteristic calculation model creation unit that creates a low-to-high-frequency characteristic calculation model by selecting a high-frequency equivalent circuit associated with the current vector calculated by the low-frequency characteristic calculation unit from among a plurality of high-frequency equivalent circuits of the electric machine each associated with the current vector, and incorporating the counter electromotive force of each phase calculated by the low-frequency characteristic calculation unit into the selected high-frequency equivalent circuit as each of voltage sources of the respective phases; and
   a low-to-high-frequency characteristic calculation unit that calculates a high frequency leakage current of the electric machine and phase currents of the respective phases by inputting the phase voltages of the respective phases to the low-to-high-frequency characteristic calculation model.

2. The simulation program according to claim 1, wherein the low-frequency characteristic calculation unit calculates the current vector and the counter electromotive force of each phase based on a magnetic flux linkage of the electric machine that varies depending on the rotor position.

3. The simulation program according to claim 1, wherein each of the plurality of high-frequency equivalent circuits is associated with both the current vector and the rotor position.

4. The simulation program according to claim 1, wherein a circuit constant of each of the plurality of high-frequency equivalent circuits is calculated by numerically analyzing an electromagnetic field inside the electric machine.

5. The simulation program according to claim 1, wherein

   each of the plurality of high-frequency equivalent circuits is created by
   calculating a magnetic field distribution in an iron core of the electric machine by nonlinear magnetic field analysis in consideration of magnetic saturation of the electric machine for a plurality of the current vectors,

calculating a resistance and an inductance of each coil conductor of the electric machine as circuit constants of each of the plurality of high-frequency equivalent circuits for each frequency by analysis of a magnetic field that fluctuates so as to be superimposed on the magnetic field distribution in the iron core for the plurality of current vectors by frequency response magnetic field analysis, and

using the resistance and the inductance for each frequency as the circuit constants of each of the plurality of high-frequency equivalent circuits.

6. The simulation program according to claim 1, wherein each of the plurality of high-frequency equivalent circuits is stored in a database in a form of a net list including connection information.

7. The simulation program according to claim 1, wherein in a case where a current amplitude and a phase angle of the current vector have changed by a predetermined ratio or more, the low-to-high-frequency characteristic calculation model creation unit selects the high-frequency equivalent circuit corresponding to the current vector at a time point at which the change has occurred from among the plurality of high-frequency equivalent circuits, performs replacement with the selected high-frequency equivalent circuit, and recreates the low-to-high-frequency characteristic calculation model.

8. A computer-readable recording medium in which the simulation program for an electric machine according to any one of claims 1 to 7 is recorded.

9. A control system that controls, based on a simulation result of the simulation program for an electric machine according to any one of claims 1 to 7, driving of the electric machine.

10. A method for creating a behavior model used for simulating a behavior of an electric machine including a rotor, the method comprising:

creating a low-frequency characteristic calculation model that calculates a current vector of the electric machine and a counter electromotive force of each phase based on a rotor position of the electric machine and phase voltages of the respective phases;

creating a database that stores a plurality of high-frequency equivalent circuits of the electric machine each associated with the current vector; and

creating a low-to-high-frequency characteristic calculation model that calculates a high frequency leakage current of the electric machine and phase currents of the respective phases based on the phase voltages of the respective phases, by selecting the high-frequency equivalent circuit associated with the current vector calculated by the low-frequency characteristic calculation model from among the plurality of high-frequency equivalent circuits stored in the database, and incorporating the counter electromotive force of each phase calculated by the low-frequency characteristic calculation model into the selected high-frequency equivalent circuit as each of voltage sources of the respective phases.

11. The method according to claim 10, wherein the creating of the database includes:

calculating a magnetic field distribution in an iron core of the electric machine by performing nonlinear magnetic field analysis in consideration of magnetic saturation of the electric machine for a plurality of the current vectors;

calculating a resistance and an inductance of each coil conductor of the electric machine for each frequency as circuit constants of each of the plurality of high-frequency equivalent circuits by analyzing a magnetic field that fluctuates so as to be superimposed on the magnetic field distribution in the iron core for the plurality of current vectors by frequency response magnetic field analysis;

creating the plurality of high-frequency equivalent circuits using the resistance and the inductance for each frequency as the circuit constants of each of the plurality of high-frequency equivalent circuits; and

storing each of the plurality of high-frequency equivalent circuits in the database in association with the current vector.

12. The method according to claim 11, wherein the creating of the database includes storing each of the plurality of high-frequency equivalent circuits in the database in association with both the current vector and the rotor position.

## Fig. 1

5a～5c
Phase Voltage of Each Phase

6
Rotor Position

80

100

**1 Low-Frequency Characteristic Calculation Unit**

7 Low-Frequency Characteristic Calculation Model

Current Vector

Counter Electromotive Force

3 **Low-to-High-Frequency Characteristic Calculation Model Creation Unit**

8
High-Frequency Equivalent Circuit

2 High-Frequency Equivalent Circuit Database

Low-to-High-Frequency Characteristic Calculation Model

10

4 **Low-to-High-Frequency Characteristic Calculation Unit**

Phase Current of Each Phase

11a～11c

High Frequency Leakage Current

12

EP 4 734 358 A1

# Fig. 2

# Fig. 3

Harmonic Component

# Fig. 4

I$_a$      $\beta$

0A_0deg.cir
50A_0deg.cir
50A_15deg.cir
50A_30deg.cir
150A_0deg.cir
150A_15deg.cir
150A_30deg.cir

2

Fig. 5

# Fig. 6

START

Create Low-Frequency Characteristic Calculation Model — S100

Create High-Frequency Equivalent Circuit Database — S101

Read Phase Voltages of Respective Phases and Value of Rotor Position — S102

Calculate Current Vector and Counter Electromotive Force of Each Phase by Using Low-Frequency Characteristic Calculation Model — S103

Create Low-to-High-Frequency Characteristic Calculation Model Based on Calculated Current Vector, Counter Electromotive Force of Each Phase, and Information of High-Frequency Equivalent Circuit Database — S104

Calculate Phase Currents of Respective Phases and High Frequency Leakage Current Based on Values of Phase Voltages of Respective Phases by Using Created Low-to-High-Frequency Characteristic Calculation Model — S105

END

# Fig. 7

START

Read Element Division Data — S200

Set Current Amplitude, Phase Angle, and Rotor Position — S201

Calculate and Store Magnetic Flux Linkage and Counter Electromotive Force by Magnetic Field Analysis — S202

S203
Has Calculation Been Performed for All Conditions?

No

Yes

END

S100

# Fig. 8

S101

```
        ┌─────────┐
        │  START  │
        └─────────┘
             │
             ▼
┌──────────────────────────────────┐
│     Read Element Division Data    │────  S300
└──────────────────────────────────┘
             │
             ▼
┌──────────────────────────────────┐
│        Set Rotor Position         │────  S301
└──────────────────────────────────┘
             │
             ▼
┌──────────────────────────────────┐
│   Set Current Amplitude and Phase Angle   │────  S302
└──────────────────────────────────┘
             │
             ▼
┌──────────────────────────────────┐
│ Calculate and Store Magnetic Field Distribution in Iron Core │────  S303
│      by Nonlinear Magnetic Field Analysis      │
└──────────────────────────────────┘
             │
             ▼
┌──────────────────────────────────┐
│ Calculate and Store Circuit Constant of High-Frequency │────  S304
│ Equivalent Circuit by Electromagnetic Field Analysis │
└──────────────────────────────────┘
             │
             ▼
          S305
      ◇ Has Calculation Been Performed ◇───── No
        for All Current Conditions?
             │ Yes
             ▼
┌──────────────────────────────────┐
│   Create High-Frequency Equivalent Circuit   │────  S306
│      by Using Stored Circuit Constant      │
└──────────────────────────────────┘
             │
             ▼
┌──────────────────────────────────┐
│ Store High-Frequency Equivalent Circuit in Database │────  S307
└──────────────────────────────────┘
             │
             ▼
        ┌─────────┐
        │   END   │
        └─────────┘
```

# Fig. 9

S104

```
        ┌─────────┐
        │  START  │
        └─────────┘
             │
             ▼
┌──────────────────────────────────────────────────┐
│   Select and Copy High-Frequency Equivalent Circuit │      S400
│       Associated with Calculated Current Vector     │
│     from High-Frequency Equivalent Circuit Database │
└──────────────────────────────────────────────────┘
             │
             ▼
┌──────────────────────────────────────────────────────┐
│ Incorporate Calculated Counter Electromotive Force of Each Phase │   S401
│  into Copied High-Frequency Equivalent Circuit as Voltage Source to │
│   Obtain Low-to-High-Frequency Characteristic Calculation Model │
└──────────────────────────────────────────────────────┘
             │
             ▼
        ┌─────────┐
        │   END   │
        └─────────┘
```

# Fig. 10

S105

START

Input Values of Phase Voltages of Respective Phases
to Low-to-High-Frequency Characteristic Calculation Model — S500

Calculate Phase Currents of Respective Phases and High Frequency
Leakage Current by Performing Circuit Analysis — S501

END

Fig. 11

# Fig. 12

$\theta_r$    $I_a$    $\beta$

0deg_0A_0deg.cir
0deg_50A_0deg.cir
0deg_50A_15deg.cir
0deg_50A_30deg.cir
0deg_150A_0deg.cir
0deg_150A_15deg.cir
0deg_150A_30deg.cir

10deg_0A_0deg.cir
10deg_50A_0deg.cir
10deg_50A_15deg.cir
10deg_50A_30deg.cir
10deg_150A_0deg.cir
10deg_150A_15deg.cir
10deg_150A_30deg.cir

20deg_0A_0deg.cir
20deg_50A_0deg.cir
20deg_50A_15deg.cir
20deg_50A_30deg.cir
20deg_150A_0deg.cir
20deg_150A_15deg.cir
20deg_150A_30deg.cir

2

# Fig. 13

```
           ┌─────────┐
           │  START  │
           └─────────┘
                │
                ▼
┌──────────────────────────────────────────────────┐
│ Create Low-Frequency Characteristic Calculation   │── S600
│ Model                                              │
└──────────────────────────────────────────────────┘
                │
                ▼
┌──────────────────────────────────────────────────┐
│ Create High-Frequency Equivalent Circuit Database │── S601
└──────────────────────────────────────────────────┘
                │
                ▼
┌──────────────────────────────────────────────────┐
│ Read Phase Voltages of Respective Phases and      │── S602
│ Value of Rotor Position                           │
└──────────────────────────────────────────────────┘
                │
                ▼
┌──────────────────────────────────────────────────┐
│ Calculate Current Vector and Counter Electromotive│── S603
│ Force of Each Phase by Using Low-Frequency        │
│ Characteristic Calculation Model                  │
└──────────────────────────────────────────────────┘
                │
                ▼
┌──────────────────────────────────────────────────┐
│ Create Low-to-High-Frequency Characteristic       │── S604
│ Calculation Model Based on Rotor Position,         │
│ Calculated Current Vector, Counter Electromotive   │
│ Force of Each Phase, and Information of High-       │
│ Frequency Equivalent Circuit Database              │
└──────────────────────────────────────────────────┘
                │
                ▼
┌──────────────────────────────────────────────────┐
│ Calculate Phase Currents of Respective Phases and │── S605
│ High Frequency Leakage Current Based on Values of  │
│ Phase Voltages of Respective Phases by Using       │
│ Created Low-to-High-Frequency Characteristic       │
│ Calculation Model                                  │
└──────────────────────────────────────────────────┘
                │
                ▼
           ┌─────────┐
           │   END   │
           └─────────┘
```

# Fig. 14

S601

**START**

Read Element Division Data — S700

Set Rotor Position — S701

Set Current Amplitude and Phase Angle — S702

Calculate and Store Magnetic Field Distribution in Iron Core by Nonlinear Magnetic Field Analysis — S703

Calculate and Store Circuit Constant of High-Frequency Equivalent Circuit by Electromagnetic Field Analysis — S704

S705
Has Calculation Been Performed for All Current Conditions? — No

Yes

S706
Has Calculation Been Performed for All Rotor Position Conditions? — No

Yes

Create High-Frequency Equivalent Circuit by Using Stored Circuit Constant — S707

Store High-Frequency Equivalent Circuit in Database — S708

**END**

# Fig. 15

S604

START

Select and Copy High-Frequency Equivalent Circuit
Associated with Calculated Current Vector and Rotor Position
from High-Frequency Equivalent Circuit Database — S800

Incorporate Calculated Counter Electromotive Force of Each Phase
into Copied High-Frequency Equivalent Circuit as Voltage Source to
Obtain Low-to-High-Frequency Characteristic Calculation Model — S801

END

Fig. 16

# Fig. 17

EP 4 734 358 A1

# Fig. 18

Cyber space

30

A-1

20

A-2

A-3

Physical space

Controller

50

40

60

Motor drivers

A-1 A-2 A-3 A-4

Motors

70

60

B-1 B-2 B-3 B-4

70

60

C-1 C-2 C-3 C-4

70

## INTERNATIONAL SEARCH REPORT

| International application No. |
|---|
| **PCT/JP2024/019613** |

| A. | CLASSIFICATION OF SUBJECT MATTER |
|---|---|

*H02P 29/00*(2016.01)i; *G06F 30/20*(2020.01)i
FI:   H02P29/00; G06F30/20

According to International Patent Classification (IPC) or to both national classification and IPC

| B. | FIELDS SEARCHED |
|---|---|

Minimum documentation searched (classification system followed by classification symbols)

H02P29/00; G06F30/20

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2022-185402 A (MITSUBA CORPORATION) 14 December 2022 (2022-12-14) paragraph [0016], fig. 1 | 1-12 |
| A | JP 2022-029253 A (JSOL CORP.) 17 February 2022 (2022-02-17) claim 1, paragraph [0009] | 1-12 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **13 August 2024** | **20 August 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/019613**

| Patent document cited in search report | | | Publication date (day/month/year) | Patent family member(s) | Publication date (day/month/year) |
|---|---|---|---|---|---|
| JP | 2022-185402 | A | 14 December 2022 | (Family: none) | |
| JP | 2022-029253 | A | 17 February 2022 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. ZHANG et al.** Finite Element Analysis and Evaluation of Stator Insulation in High Voltage Synchronous Motor. *IEEE Trans. Magn.*, 2012, vol. 48 (2), 955-958